# EUROPEAN PATENT APPLICATION

(11) **EP 4 596 867 A1**
(43) Date of publication of application: **06.08.2025**
(21) Application number: 24155346.0
(22) Date of filing: 01.02.2024
(51) Int. Cl.: F03D 1/06

(54) **METHOD AND APPARATUS FOR APPLYING A VORTEX GENERATOR TAPE TO A BLADE OF A WIND TURBINE**

(71) Applicant: Siemens Gamesa Renewable Energy A/S, 7330 Brande (DK)
(72) Inventor: Rokohl, Simon Groenlund, 9000 Aalborg (DK)
(74) Representative: SGRE-Association

(57) **Abstract**

It is described an apparatus (10) for applying a tape (11) to a blade (6) of a wind turbine (1), wherein the tape (6) comprising a plurality of vortex generators (VG) or indicating locations for attaching a plurality of vortex generators (VG) on the blade (6). The apparatus (10) is configured to be movable on a floor (12) in a moving path in accordance with a longitudinal direction of the blade (6) and comprises a portal (13) having a tape application tool (14) configured to apply the tape (11) to the blade (6), the tape application tool (14) being movable along the portal (13) in a vertical direction; and a distance detecting device (15), preferably a laser distance measuring device, being configured to detect an actual distance between the tape application tool (14) and the floor (12), preferably being configured to detect reference markings (16) arranged at the floor (12) or at a blade carrying equipment such as a root- and tip turning device along the moving path of the apparatus (10) .

## Description

### Field of invention

The present invention relates to a method and an apparatus for applying a tape to a blade of a wind turbine, wherein the tape comprises a plurality of vortex generators or indicating locations for attaching a plurality of vortex generators on the blade.

Vortex generators (VGs) are widely used on wind turbine blades for improving aerodynamic performance and thus improving power output of associated turbines. The vortex generators mix the high energy turbulent flow of wind into the low energy laminar flow of wind right next to the blade surface. Hence, causing a delay of wind flow separation, so that the wind flow is not detached from the aerodynamic blade profile.

With the increasing trend in blade size, it is necessary to mount a high number of vortex generators along the whole span of the blade.

Mounting the vortex generators is a time-consuming process in blades production, where the process is manual and relies on the user skills. Usually, tape measurers are used for marking the positions of the the vortex generators according to blade specification. Afterwards, these positions are verified, and the mounting process can begin.

WO 2022/013355 A1 describes a vortex generator tape for installation on an outer surface of a wind turbine blade, the. EP 3 211 219 A1 describes a method of mounting a vortex generator to a wind turbine blade. CN 114289269 A describes an automatically positionable wind turbine blade gluing device.

### Summary of the Invention

There may be a need for mounting vortex generators to a blade in an easier, faster and more accurate manner. This need may be met by the subject matters according to the independent claims. The present invention is further developed as set forth in the dependent claims.

According to a first aspect of the invention, an apparatus for applying a tape to a blade of a wind turbine is provided, wherein the tape comprises a plurality of vortex generators (VG) or indicates locations for attaching a plurality of vortex generators on the blade. The apparatus is configured to be movable on a floor in a moving path in accordance with a longitudinal direction of the blade. The apparatus comprises a portal having a tape application tool configured to apply the tape to the blade, the tape application tool being movable along the portal in a vertical direction, and a distance detecting device, preferably a laser distance measuring device, which is configured to detect an actual distance between the tape application tool and the floor, preferably configured to detect reference markings arranged at the floor or at a blade carrying equipment such as a root- and tip turning device along the moving path of the apparatus.

The apparatus can further comprise another distance detecting device for detecting a horizontal distance between the tape application tool and the blade or a spanwise position of blade.

Advantageously, the complex and user dependent mounting of the vortex generators to the wind turbine blade is faster, easier and more accurate. The portal can reach up to the maximum blade chord. The apparatus is moved next to the blade so that it can reach the blade with the portal, which can comprise an arm, to be able to move in horizontal direction and apply a force against the blade's surface. At the end of the portal or the arm, the tape application tool can be arranged. The portal or the arm can move up and down along machine tower in chordwise direction of the blade. The distance detecting device, preferably the laser distance measuring device, can detect the exact height position from a certain reference point (e.g. from the floor).

In an embodiment, the tape application tool comprises a rotatable tape roll. The tape roll can be placed on the tape application tool by means of the user when the mounting process on a new blade is about to begin. The user can move the apparatus to a start position, for instance in the very root end of the blade. Sensors can be arranged for detecting apparatus position in relation to the spanwise position of the blade. These sensors could be present in e.g. the blade carrying equipment such as a root- and tip turning device or the floor. The user can start the movement of the apparatus where the tape is unwrapped and applied with pressure towards the blade surface.

In an embodiment, the apparatus further comprises a control device configured to move the tape application tool to a target distance between the tape application tool and the floor, preferably between the tape application tool and a reference marking which is detected by the distance detecting device, based on a difference between the target distance and the detected actual distance. This embodiment provides a further automated application of the tape, wherein the reference markings provide for a very accurate detection of the distance between the tape application tool and the floor along the entire moving path.

In an embodiment, the apparatus either is a semiautomatic vehicle (SAV) driven by a user, or an automated guided vehicle (AGV), preferably a fully automated guided vehicle (AGV). A less automated solution for mounting is achieved, where a semiautomatic vehicle (SAV) driven by a user is utilized. As an alternative, it can also be a fully automated guided vehicle (AGV) when the solution is fully matured. In the fully automated solution, the AGV could carry out the application of the tape without any user interference at all, except from some actions such as changing a tape roll and pressing a start button. In this case, sensors can be arranged for ensuring an operation being free of collisions.

In an embodiment, the tape application tool comprises a pressing device which is configured to apply a pressing force to the tape for applying the tape to the blade, wherein the pressing device preferably comprises a pressure force control device which is configured to control an amount of the pressing force. For smooth application, such feedback mechanism can ensure a constant and precise application pressure.

In an embodiment, the apparatus further comprises a user interface which is configured to enable a user to interact with the apparatus, wherein the user is enabled to input at least one parameter into the user interface, and the apparatus is configured to process to the parameter for applying the tape to the blade, wherein the parameter comprises at least one of a start position at a beginning of the moving path of the apparatus, an indication whether the tape is applied to a pressure side or a suction side of the blade, and a target height at the blade where the tape is to be applied. Thereby, the application of the tape can be adapted in a flexible manner to specifications of the tape and the blade.

In an embodiment, the user interface is configured to provide for the user a signal indicating the user to manually move the tape application tool along the portal either up or down in the vertical direction based on a difference between a target distance and the detected actual distance. During the application of the tape, the user gets a signal, for example on a panel user interface, whether to move up or down the tape application tool and thus the applied tape. In this case, the tape is applied in the desired height according to vortex generator specifications.

The user interface, such as a human machine interface (HMI) at the apparatus can show the user that he/she is at the correct starting point in the spanwise position of the blade. The user can select whether he/she is present at pressure or suction side of the blade. Based on pre-loaded drawings to the machine software, the user can instruct to move the tape application tool to a given height according to the specifications of the vortex generators and the blade (blade drawings).

In an embodiment, the tape comprises markings indicating the location of the vortex generators or a distance between the vortex generators in the longitudinal direction of the blade. As it is critical when a short space is left between each vortex generator, the sufficient spacings or distances between the vortex generators in the longitudinal direction of the blade prevent the vortex generators from buckling and detaching during a blade deflection in operation of the wind turbine.

According to a second aspect of the invention, an arrangement for applying a tape to a blade of a wind turbine is provided. The tape comprises a plurality of vortex generators or indicates locations for attaching a plurality of vortex generators on the blade. The arrangement comprises the apparatus and reference markings arranged at the floor or at a blade carrying equipment such as a root- and tip turning device along the moving path of the apparatus.

According to a third aspect of the invention, a method of applying a tape to a blade of a wind turbine is provided. The tape comprises a plurality of vortex generators or indicates locations for attaching a plurality of vortex generators on the blade. The method uses the apparatus and comprises steps of arranging the blade on a floor; arranging the apparatus to a start position at a beginning of a moving path of the apparatus; moving the apparatus on the floor in the moving path in accordance with the longitudinal direction of the blade. During the movement of the apparatus, the method comprises steps of detecting an actual distance between the tape application tool and the floor by the distance detecting device; moving the tape application tool to a target distance between the tape application tool and the floor based on a difference between the target distance and the detected actual distance; and applying the tape to the blade at the target distance by the tape application tool.

In an embodiment, the method further comprises arranging reference markings at the floor or at a blade carrying equipment such as a root- and tip turning device along the moving path of the apparatus in accordance with a longitudinal direction of the blade, and detecting the reference markings by the distance detecting device.

In an embodiment, the method further comprises one of the following: attaching the plurality of vortex generators above or below the tape; applying an adhesive above or below the tape before attaching the plurality of vortex generators. In this embodiment, the applied tape is applied on the blade and can for instance be utilized for positioning vortex generators above or below the applied tape. The terms "above" and "below" preferably refer to the vertical direction. Vortex generators typically come with a pre-mounted tape where there is room for applying adhesive above or below for ensuring extra adhesion performance.

In an embodiment, the tape is a double-sided adhesive tape, and the plurality of vortex generators are adhered on the tape after having removed a peeling tape from the double-sided adhesive tape. In a modification, the tape can be a one-sided adhesive layer, where the vortex generators are already prepared at the other side of the tape. In this modification, the application procedure is further enhanced as a separate adhesive step of the vortex generators can be omitted.

According to a fourth aspect of the invention, a blade is provided which comprises the tape which has been applied by the method.

According to a fifth aspect of the invention, a wind turbine is provided, which comprises a rotor having a plurality of the rotor blades. The rotor is mounted to a nacelle to rotate about a rotation axis with a rotor speed to drive a generator for producing electrical energy, and the nacelle is mounted to a tower to rotate about a yaw axis.

According to the present invention, the tape can be applied to the blade faster, more accurate and reliable, wherein the tape can provide an identification of vortex generator position marks. In principle, there should be no need for quality checks of correct positioning, since this has already been done by the apparatus which can generate a report. The mounting of the vortex generators itself will potentially also be faster, where one operator can apply adhesive (e.g. with a roller above and below the tape) and another operator can apply the vortex generators. The present invention can also reduce the amount of work from platforms which is expected to increase with growing blade sizes.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows an arrangement for applying a tape to a blade of a wind turbine according to an embodiment.
Fig. 2 shows a tape applied to a blade according to an embodiment.
Fig. 3 shows a wind turbine and the different elements thereof according to an embodiment.

### Detailed Description

The illustrations in the drawings are schematically. It is noted that in different figures, similar or identical elements are provided with the same reference signs.

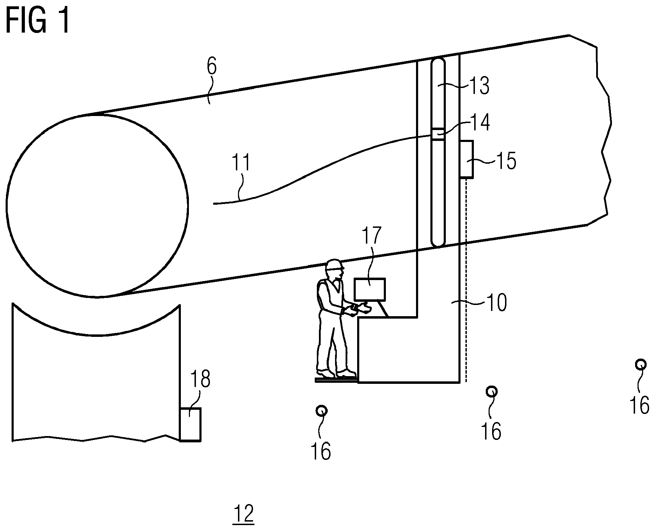

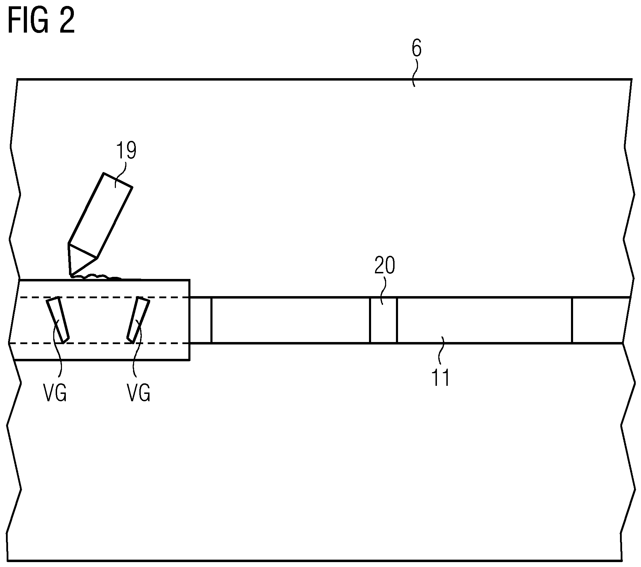

**Fig. 1** shows an arrangement for applying a tape 11 to a blade 6 of a wind turbine 1 according to an embodiment. The tape 11 indicates locations for attaching a plurality of vortex generators VG (see Fig. 2) on the blade 6. The arrangement comprises an apparatus 10 for applying the tape 11 to the blade 6 of the wind turbine 1, which apparatus 10 is configured to be movable on a floor 12 in a moving path in accordance with a longitudinal direction of the blade 6, i.e., substantially in parallel to the longitudinal direction of the blade 6. The apparatus 10 comprises a portal 13 having a tape application tool 14 configured to apply the tape 11 to the blade 6, wherein the tape application tool 14 is movable along the portal 13 in a vertical direction. The tape application tool 14 can comprise a rotatable tape roll.

The apparatus 10 further comprises a distance detecting device 15, preferably a laser distance measuring device, which is configured to detect an actual distance between the tape application tool 14 and the floor 12.

The arrangement further comprises reference markings 16 which are arranged at the floor 12 along the moving path of the apparatus 10. The reference markings 16 can also be applied at a blade carrying equipment such as a root- and tip turning device. The advantage of the latter is the independency of the actual position in a hall where the blade 6 is placed. The distance detecting device 15, preferably the laser distance measuring device, is configured to detect the reference markings 16.

The apparatus 10 further comprises a user interface 17 which is configured to provide for the user a signal indicating the user to manually move the tape application tool 14 along the portal 13 either up or down in the vertical direction based on a difference between the target distance and the detected actual distance.

Alternatively or in addition, the apparatus 10 can further comprise a control device which is configured to automatically move the tape application tool 14 to the target distance between the tape application tool 14 and the floor 12, preferably between the tape application tool 14 and the reference marking 16 which is detected by the distance detecting device 15, based on the difference between the target distance and the detected actual distance.

In this case, the apparatus 10 can be an automated guided vehicle AGV, preferably a fully automated guided vehicle AGV, which automatically applies the tape 11 to the blade 6. If, however, the tape application tool 14 is manually moved along the portal 13 either up or down, the apparatus 10 can be a semiautomatic vehicle (SAV) driven by the user.

The user interface 17 can be configured to enable the user to interact with the apparatus 10, wherein the user is enabled to input at least one parameter into the user interface 17, and the apparatus 10 is can be configured to process to the parameter for applying the tape 11 to the blade 6, wherein the parameter comprises at least one of a start position (indicated by a start reference 18 in Fig. 2) at a beginning of a moving path of the apparatus 10, an indication whether the tape 11 is applied to a pressure side or a suction side of the blade 6, and a target height at the blade 6 where the tape 11 is to be applied.

The tape application tool 14 can comprise a pressing device (not shown) which is configured to apply a pressing force to the tape 11 for applying the tape 11 to the blade 6, wherein the pressing device preferably comprises a pressure force control device which is configured to control an amount of the pressing force. The control of the amount of the pressing force is preferably performed by a feedback control, where a pressure sensor senses the actual pressing force.

**Fig. 2** shows a tape 11 applied to a blade 6 according to an embodiment. The tape 11 comprises markings 20 indicating a distance between the vortex generators VG in the longitudinal direction of the blade 6. Alternatively or in addition, markings can be provided at the tape 11 which indicate the location, where the vortex generators VG are to be attached.

The operation of the apparatus 10 is as follows: The blade 6 is arranged on a floor 12, and the apparatus 10 is arranged to a start position indicated by a start reference 18 in Fig. 2 at a beginning of a moving path of the apparatus 10. In an embodiment, the start position can be detected or recognized by means of the distance detecting device 15.

Thereafter, the apparatus 10 is moved on the floor 12 in the moving path in accordance with the longitudinal direction of the blade 6. During the movement of the apparatus 10, an actual distance between the tape application tool 14 and the floor 12 is detected by the distance detecting device 15, and the tape application tool 14 is moved to a target distance between the tape application tool 14 and the floor 12 based on a difference between the target distance and the detected actual distance. The movement of the tape application tool 14 is preferably carried out by a feedback control. During the movement of the tape application tool 14, the tape 11 is applied to the blade 6 at the target distance by the tape application tool 14.

If the distance detecting device 15 is configured to detect reference markings 16, the reference markings 16 are arranged beforehand at the floor 12 along the moving path of the apparatus 10 in accordance with a longitudinal direction of the blade 6, so that the distance between the tape application tool 14 and the floor 12 is detected by detecting the reference markings 16 by the distance detecting device 15.

After having applied the tape 11 to the blade 6, a plurality of vortex generators VG can be attached above or below the tape 11. It is possible to apply an adhesive by an adhesive dispenser 19 above or below the tape 11 before attaching the plurality of vortex generators VG.

In an embodiment, the tape 11 is a double-sided adhesive tape, and the plurality of vortex generators VG is adhered on the tape 11 after having removed a peeling tape from the double-sided adhesive tape 11.

In an modification, the tape 11 can already comprise the vortex generators VG, when the tape 11 is applied to the blade 6.

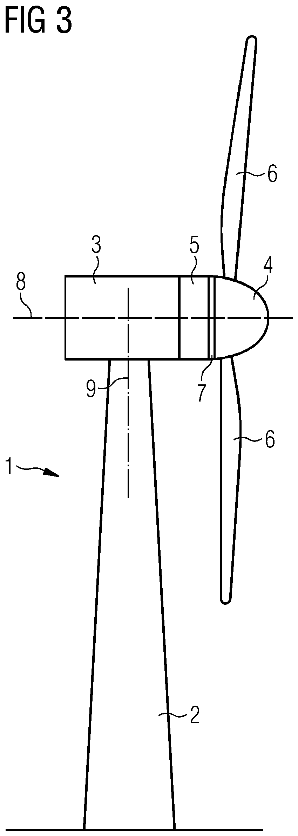

**Fig. 3** shows a wind turbine 1 according to an embodiment. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as a yaw axis 9.

The wind turbine 1 also comprises a rotor 4 with three of the rotor blades 6 (of which two rotor blades 6 are depicted in Fig. 1). At each blade 6, at least one tape 11 and vortex generators VG are attached (not shown). Each blade 6 is configured to be pitched by a pitch angle about a pitch axis of the blade 6. The rotor 4 is mounted rotatable about a rotation axis 8 (rotor axis) with regard to the nacelle 3 by means of a main bearing 7.

The wind turbine 1 furthermore comprises a generator 5. The generator 5 in turn comprises a rotor connecting the generator 5 with the rotor 4. If the rotor 4 is connected directly to the generator 5, the wind turbine 1 is referred to as a gearless, direct-driven wind turbine. Such a generator 5 is referred as direct drive generator 5. As an alternative, the rotor 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the rotor 4 into electrical energy in the shape of an AC power.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

Independent of the grammatical term usage, individuals with male, female or other gender identities are included within the term.

## Claims

1. An apparatus (10) for applying a tape (11) to a blade (6) of a wind turbine (1), the tape (6) comprising a plurality of vortex generators (VG) or indicating locations for attaching a plurality of vortex generators (VG) on the blade (6), wherein the apparatus (10) is configured to be movable on a floor (12) in a moving path in accordance with a longitudinal direction of the blade (6), the apparatus (10) comprising:
a portal (13) having a tape application tool (14) configured to apply the tape (11) to the blade (6), the tape application tool (14) being movable along the portal (13) in a vertical direction; and
a distance detecting device (15), preferably a laser distance measuring device, being configured to detect an actual distance between the tape application tool (14) and the floor (12), preferably being configured to detect reference markings (16) arranged at the floor (12) along the moving path of the apparatus (10).

2. The apparatus (10) according to the preceding claim, further comprising
a control device configured to move the tape application tool (14) to a target distance between the tape application tool (14) and the floor (12), preferably between the tape application tool (14) and a reference marking (16) which is detected by the distance detecting device (15), based on a difference between the target distance and the detected actual distance.

3. The apparatus (10) according to any one of the preceding claims, wherein
the apparatus (10) either is a semiautomatic vehicle (SAV) driven by a user, or an automated guided vehicle (AGV), preferably a fully automated guided vehicle (AGV).

4. The apparatus (10) according to any one of the preceding claims, wherein
the tape application tool (14) comprises a rotatable tape roll.

5. The apparatus (10) according to any one of the preceding claims, wherein
the tape application tool (14) comprises a pressing device which is configured to apply a pressing force to the tape (11) for applying the tape (11) to the blade (6), wherein the pressing device preferably comprises a pressure force control device which is configured to control an amount of the pressing force.

6. The apparatus (10) according to any one of the preceding claims, further comprising
a user interface (17) which is configured to enable a user to interact with the apparatus (10), wherein the user is enabled to input at least one parameter into the user interface (17), and the apparatus (10) is configured to process to the parameter for applying the tape (11) to the blade (6), wherein the parameter comprises at least one of a start position at a beginning of the moving path of the apparatus (10), an indication whether the tape (11) is applied to a pressure side or a suction side of the blade (6), and a target height at the blade (6) where the tape (11) is to be applied.

7. The apparatus (10) according to any one of the preceding claims, wherein
the user interface (17) is configured to provide for the user a signal indicating the user to manually move the tape application tool (14) along the portal (13) either up or down in the vertical direction based on a difference between a target distance and the detected actual distance.

8. The apparatus (10) according to any one of the preceding claims, wherein
the tape (11) comprises markings (20) indicating the location of the vortex generators (VG) or a distance between the vortex generators (VG) in the longitudinal direction of the blade (6).

9. An arrangement for applying a tape (11) to a blade (6) of a wind turbine (1), the tape (11) comprising a plurality of vortex generators (VG) or indicating locations for attaching a plurality of vortex generators (VG) on the blade (6), the arrangement comprising the apparatus (10) according to any one of the preceding claims and reference markings (16) arranged at the floor (12) along the moving path of the apparatus (10).

10. A method of applying a tape (11) to a blade (6) of a wind turbine (1), the tape (11) comprising a plurality of vortex generators (VG) or indicating locations for attaching a plurality of vortex generators (VG) on the blade (6), wherein the method uses the apparatus (10) according to any one of claims 1 to 9 and comprises steps of:
arranging the blade (6) on a floor (12);
arranging the apparatus (10) to a start position at a beginning of a moving path of the apparatus (10);
moving the apparatus (10) on the floor (12) in the moving path in accordance with the longitudinal direction of the blade (6), wherein during the movement of the apparatus (10), the method comprises steps of:
detecting an actual distance between the tape application tool (14) and the floor (12) by the distance detecting device 15;
moving the tape application tool (14) to a target distance between the tape application tool (14) and the floor (12) based on a difference between the target distance and the detected actual distance; and
applying the tape (11) to the blade (6) at the target distance by the tape application tool (14).

11. The method according to the preceding claim, further comprising
arranging reference markings (16) at the floor (12) or at a blade carrying equipment such as a root- and tip turning device along the moving path of the apparatus (10) in accordance with a longitudinal direction of the blade (6); and
detecting the reference markings (16) by the distance detecting device (15).

12. The method according to the preceding claim, further comprising one of the following:
attaching the plurality of vortex generators (VG) above or below the tape (11);
applying an adhesive above or below the tape (11) before attaching the plurality of vortex generators (VG).

13. The method according to any one of claims 10 to 12, wherein
the tape (11) is a double-sided adhesive tape, and the plurality of vortex generators (VG) are adhered on the tape (11) after having removed a peeling tape from the double-sided adhesive tape (11).

14. A blade (6) comprising a tape (11) which has been applied by the method according to any one of claims 10 to 13.

15. A wind turbine (1) comprising a rotor (4) having a plurality of rotor blades (6) according to the preceding claim, wherein the rotor (4) is mounted to a nacelle (3) to rotate about a rotation axis (8) with a rotor speed to drive a generator (5) for producing electrical energy, and the nacelle (3) is mounted to a tower (2) to rotate about a yaw axis (9).
